# EUROPEAN PATENT APPLICATION

(11) **EP 2 104 093 A1**
(43) Date of publication of application: **23.09.2009**
(21) Application number: 07829667.0
(22) Date of filing: 12.10.2007
(51) Int. Cl.: G09G 3/36, G02F 1/13, G09G 3/20, H04M 1/00

(54) **LIQUID CRYSTAL DISPLAY DEVICE, PORTABLE TYPE INFORMATION TERMINAL DEVICE, VIEW ANGLE CONTROL METHOD, CONTROL PROGRAM, AND RECORDING MEDIUM**

(30) Priority: 18.12.2006 JP 2006340344
(71) Applicant: Sharp Kabushiki Kaisha, Osaka-shi, Osaka 545-8522 (JP)
(72) Inventor: HOTTA, Kohji, Osaka 545-8522 (JP); NAKAMURA, Tamaki, Osaka 545-8522 (JP)
(74) Representative: Müller - Hoffmann & Partner
(86) International application number: PCT/JP2007/069931
(87) International publication number: WO 2008/075497

(57) **Abstract**

A mobile phone (1) of this invention includes: a position determination section (31) for determining a position of a display section (18), which display section (18) is rotatable on an axis perpendicular to a display screen of the display section (18) so as to be fixed at respective one of at least two positions; and a view angle control section (40) for changing the view angle of the display section (18) in a predetermined view angle control direction which corresponds to the position determined by the position determination section (31). Hence, a liquid crystal display device is attained which appropriately maintains a view angle in accordance with a usage state of a display section.

## Description

### Technical Field

The present invention relates to a liquid crystal display device, a portable information terminal device, a view angle control method, a control program, and a recording medium, each of which for controlling a view angle of a display section.

### Background Art

Conventionally, a liquid crystal display (LCD) has been broadly used as a display for a mobile phone such as a PDC (personal digital cellular) and a PHS (personal handyphone system), and a portable information terminal device such as a PDA (Personal Digital Assistant). It has been said that the LCD has a weakness that its view angle is narrower as compared to a CRT (Cathode Ray Tube), a plasma display, and other displays. However, due to advancement of recent LCD techniques, the view angle is becoming broader in angle.

However, in a case where the portable information terminal device is used in a crowded situation such as inside a train or a bus, contents displayed on the display screen of the portable information terminal device may be peeked into by surrounding people. Particularly, it is not preferable from a privacy point of view in a case of preparing or reading an e-mail, for such contents to be peeked into by the surrounding people.

So as to deal with this problem, a proposal has been made of an LCD in which a view angle is controllable. Use of a view angle control device disclosed in Patent Literatures 1 and 2 allows switching from one of (i) a normal view angle mode (broad view angle mode) having a normal view angle and (ii) a limited view angle mode (narrow view angle mode) that limits the view angle narrow to the other mode.

More specifically, the view angle is changed, for example, by changing an orientation direction of liquid crystal molecules in a liquid crystal layer.

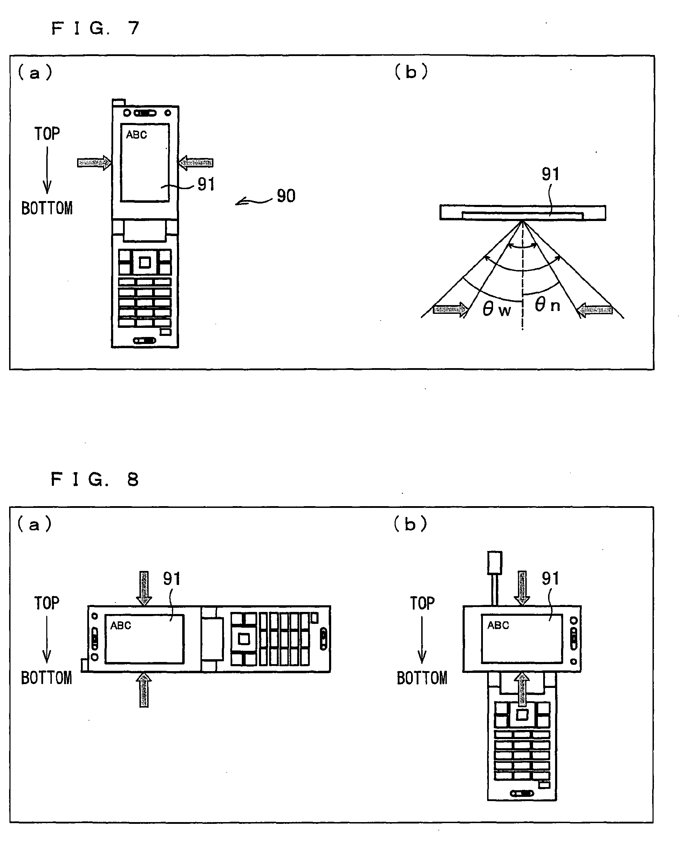

Hence, as illustrated in (a) and (b) of Fig. 7, fields of vision is limited from sides of a direction perpendicular (horizontal direction of the display screen 91 from view of a user) to a display direction of a display screen 91 of a portable information terminal device (for example, a mobile phone 90). The display direction indicates a top and bottom of display contents, and denotes a vertical direction of the display screen 91 having a proper top and bottom position. This prevents the contents displayed on the display screen 91 from being peeked in by surrounding people. In Fig. 7, (a) is a front view of the display screen 91, and (b) is a top view of the display screen 91.

### Citation List

Patent Literature 1
   Japanese Patent Application Publication, Tokukai, No. 2006-98691 A (Publication Date: April 13, 2006)
Patent Literature 2
   Japanese Patent Application Publication, Tokukai, No. 2006-72239 A (Publication Date: March 16, 2006)
Patent Literature 3
   Japanese Patent Application Publication, Tokukaihei, No. 10-197844 A (Publication Date: July 31, 1998)
Patent Literature 4
   Japanese Patent Application Publication, Tokukai, No. 2001-344050 A (Publication Date: December 14, 2001)
Patent Literature 5
   Japanese Patent Application Publication, Tokukai, No. 2003-295160 A (Publication Date: October 15, 2003)
Patent Literature 6
   Japanese Patent Application Publication, Tokukai, No. 2003-337336 A (Publication Date: November 28, 2003)

### Summary of Invention

### Technical Problem

However, techniques disclosed in Patent Literatures 1 and 2 have the following problems.

Recent portable information terminal devices have been advancing to include multiple functions such as a camera function and a television function. In order to optimally use these functions, a display section of the liquid crystal display device is flexibly switched in position vertically and horizontally. A display direction is also switched so as to display contents. The switching of a position denotes a change in a fixed orientation of the display section. For example, with a liquid crystal display device in which the display section is rotatable on its axis perpendicular to a display screen of the display section so as to be fixed at an arbitrary rotational position, the switching of a position denotes a rotational position change (and a switching of a display direction).

A specific example is as illustrated in (a) and (b) of Fig. 8, in which a longitudinal display screen 91 illustrated in (a) of Fig. 7 is rotated by 90 degrees and fixed so as to be long sideways, and the display direction is switched by 90 degrees together with the rotation of the display screen 91. This makes it easier to view the screen when watching television broadcast or taking photographic pictures.

In the liquid crystal display device which employs the view angle control device of Patent Literatures 1 and 2, when a rotation of 90 degrees is carried out as illustrated in (a) and (b) of Fig. 8 while the liquid crystal display device is in a limited view angle mode, a view angle control direction (direction in which the width of the view angle changes) also rotates by 90 degrees. As a result, view angle limitation is carried out in a display direction of the display screen 91 (vertical direction from view of a user). This causes a problem that the user themselves cannot view the contents on the display screen 91.

Furthermore, after the rotational position and the display direction are switched by 90 degrees, if the view angle cannot be controlled in a horizontal direction from view of the user, the view angle control for preventing peeking in by other persons would not be appropriately carried out.

The present invention is accomplished in view of the above problem, and its object is to realize a liquid crystal display device, a portable information terminal device, a view angle control method, a control program, and a recording medium, each of which maintains an appropriate view angle even if a usage state (position of a display section such as a display direction and a rotational position) is switched.

### Solution to Problem

In order to attain the object, a liquid crystal display device of the present invention includes: display direction switching means for switching a display direction to one of at least two display directions, the display direction being indicative of a top and bottom of display contents displayed on a display section; display direction determination means for determining a display direction which has been switched by the display direction switching means; and view angle control means for changing a view angle of the display section in a predetermined view angle control direction corresponding to the display direction determined by the display direction determination means.

According to the arrangement, display direction switching means switches a display direction of a display section to one of at least two display directions, to display display contents. The display direction denotes a top and bottom of the display contents displayed on a display screen of the display section. This display direction is flexibly switched by the display direction switching means, separately to the top and bottom of the display section itself. Subsequently, the display direction in which the display contents is displayed is determined by display direction determination means.

The view angle control means controls the view angle in a predetermined view angle control direction which corresponds to the display direction determined by the display direction determination means. That is to say, the view angle is changed in width in a predetermined view angle control direction. The view angle control direction is indicative of a predetermined direction in a width change of the view angle on the display screen.

Thereafter, upon switching of the display section by the display direction switching means, the display direction determination means determines the display direction of the switched display section.

The view angle control means controls the view angle in a view angle control direction which corresponds to the display direction which has been switched and which has been determined by the display direction determination means.

This thus controls the view angle in the view angle control direction corresponding to the display direction which has been switched and determined, no matter which direction the display direction of the display section is switched to. Hence, the view angle of the display section is always optimally maintained regardless of the display direction.

In order to attain the object, a liquid crystal display device of the present invention in which a display section is rotatable on an axis perpendicular to a display screen of the display section so as to be fixed at respective one of at least two rotational positions, is a liquid crystal display device which includes: rotational position determination means for determining a rotational position of the display section; and view angle control means for changing a view angle of the display section in a predetermined view angle control direction corresponding to the rotational position determined by the rotational position determination means.

According to the arrangement, the display section of the liquid crystal display device is rotatable on an axis perpendicular to a display screen of the display section so as to be fixed at respective one of at least two rotational positions. Then, rotational position determination means determines which rotational position the display section is fixed at.

The view angle control means controls the view angle in a predetermined view angle control direction corresponding to a rotational position determined by the rotational position determination means. That is to say, the view angle control means changes a width of the view angle in the predetermined view angle control direction. The view angle control direction is indicative of a predetermined direction in which the width of the view angle of a display screen changes.

Upon rotation of the display section to another rotational position, the rotational position determination means determines the rotational position of the display section that has been changed.

The view angle control means controls the view angle in a view angle control direction corresponding to a rotational position thus rotated and which has been determined by the rotational position determination means.

Hence, the view angle is controlled in the view angle control direction corresponding to the rotational position which has been rotated and determined, no matter which rotational position the display section is fixed at. Therefore, the view angle of the display section is always optimally maintained, regardless of the rotational position.

In order to attain the object, a portable information terminal device includes the foregoing liquid crystal display device. This allows realizing a portable information terminal device which is capable of maintaining an appropriate view angle in accordance with a position (display direction/rotational position) of a display section.

In order to attain the object, a method of the present invention for controlling a view angle of a liquid crystal display device includes the steps of: (i) switching a display direction to one of at least two display directions, the display direction being indicative of a top and bottom of display contents displayed on a display section of the liquid crystal display device; (ii) determining a display direction which has been switched in the step (i); and (iii) changing a view angle of the display section in a predetermined view angle control direction corresponding to the display direction determined in the step (ii).

According to the method, in the step (i), a display direction of the display section is switched to one of at least two display directions, so as to display display contents on the display section. Then, in the step (ii), which display direction the display contents is displayed in is determined. In the step (iii), the view angle is controlled in a view angle control direction which corresponds to a display direction determined in the step (ii).

Hence, in a case where the display direction of the display section has been switched, it is possible to carry out the view angle control in accordance with the display direction that has been switched. As a result, an appropriate view angle is maintained so as to correspond to the display direction.

In order to attain the object, a method of the present invention for controlling a view angle of a liquid crystal display device in which a display section is rotatable on an axis perpendicular to a display screen of the display section so as to be fixed at respective one of at least two rotational positions, is a method which includes the steps of: (i) determining a rotational position of the display section; and (ii) changing a view angle of the display section in a predetermined view angle control direction corresponding to the rotational position determined in the step (i).

According to the method, when the display section has been rotated and a rotational position has been changed, in the step (i), which rotational position the display section is fixed at is determined. In the step (ii), the view angle is controlled in a view angle control direction which corresponds to the rotational position determined in the step (i).

Hence, in a case where the display section is rotated so as to change the rotational position, it is possible to carry out the view angle control in accordance with the rotational position that has been rotated. As a result, an appropriate view angle is maintained so as to correspond to the rotational position of the display section.

The liquid crystal display device and the portable information terminal device may be realized by a computer. In this case, a control program of the liquid crystal display device (or the portable information terminal device) so as to cause a computer to function as each of the means of the liquid crystal display device (or the portable information terminal device), and a computer-readable recording medium in which such control program is stored are also within the scope of the present invention.

### Brief Description of Drawings

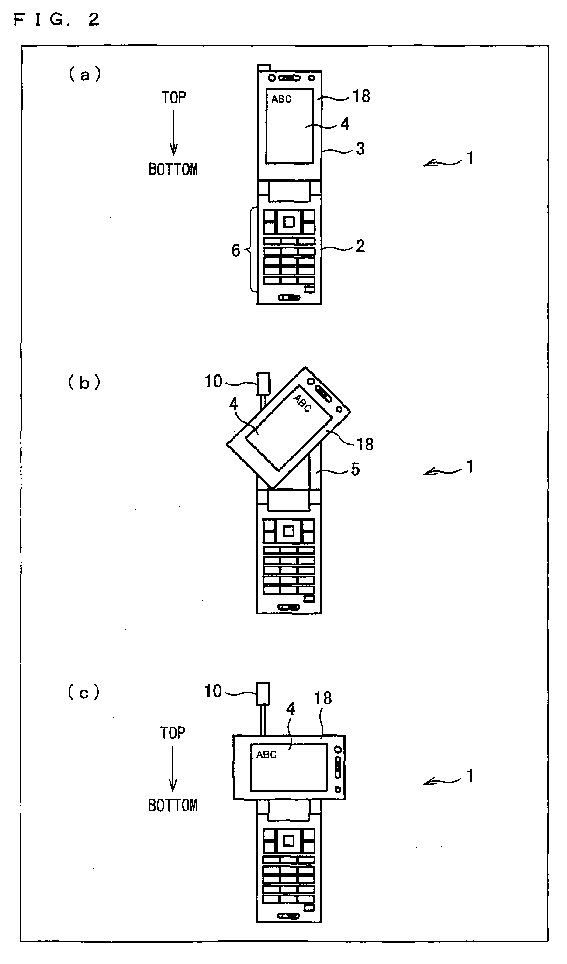

Fig. 1

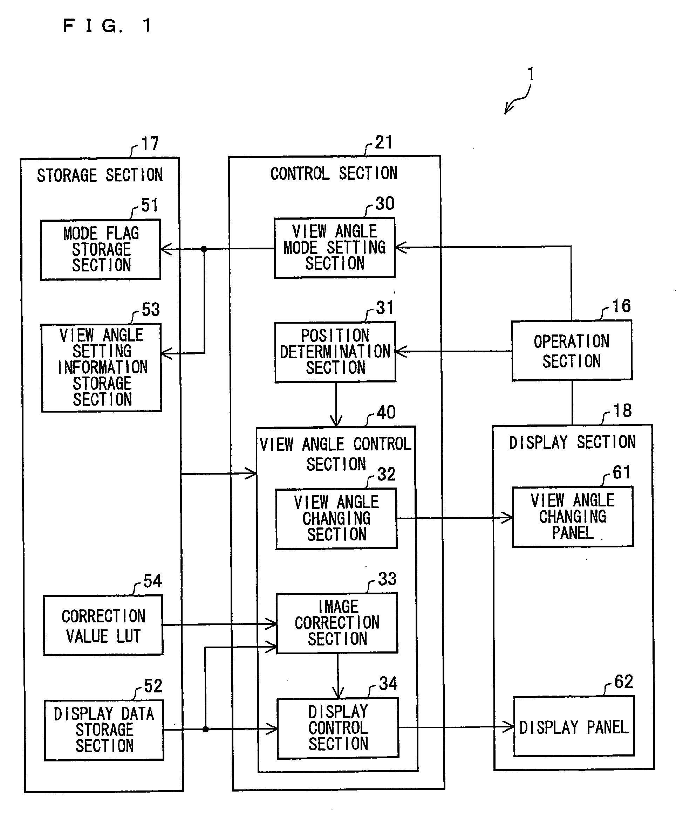

   Fig. 1 is a block diagram illustrating an essential arrangement of a mobile phone in accordance with the present embodiment.
Fig. 2
   (a) through (c) of Fig. 2 are explanatory views illustrating an external appearance of a mobile phone in accordance with the present embodiment.
Fig. 3

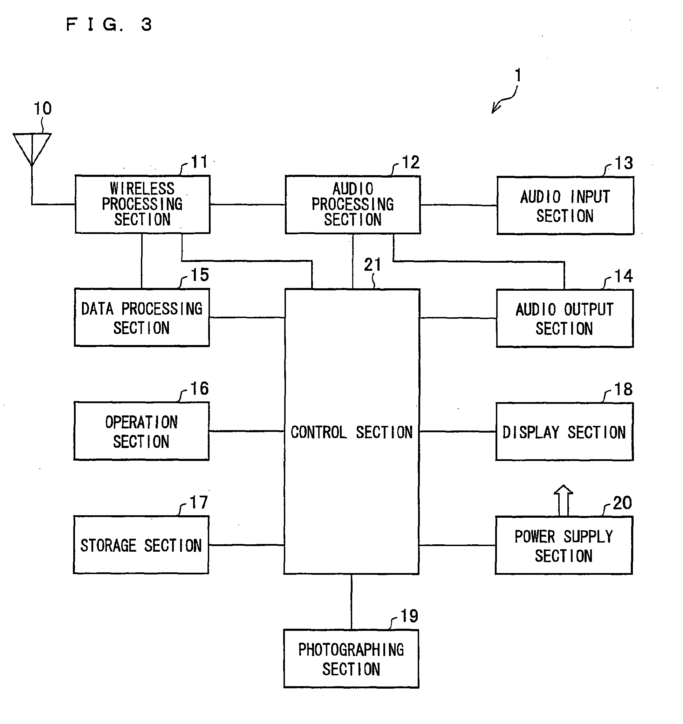

   Fig. 3 is a diagram schematically illustrating an arrangement of a mobile phone in accordance with the present embodiment.
Fig. 4

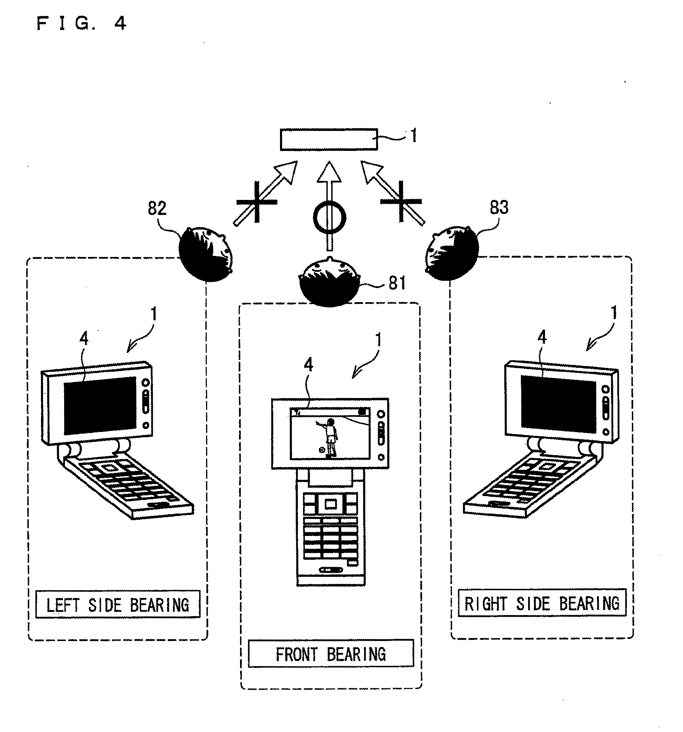

   Fig. 4 is an explanatory view illustrating a display screen visually seen from a front or an oblique view, while a mobile phone of the present embodiment is set as a limited view angle mode.
Fig. 5

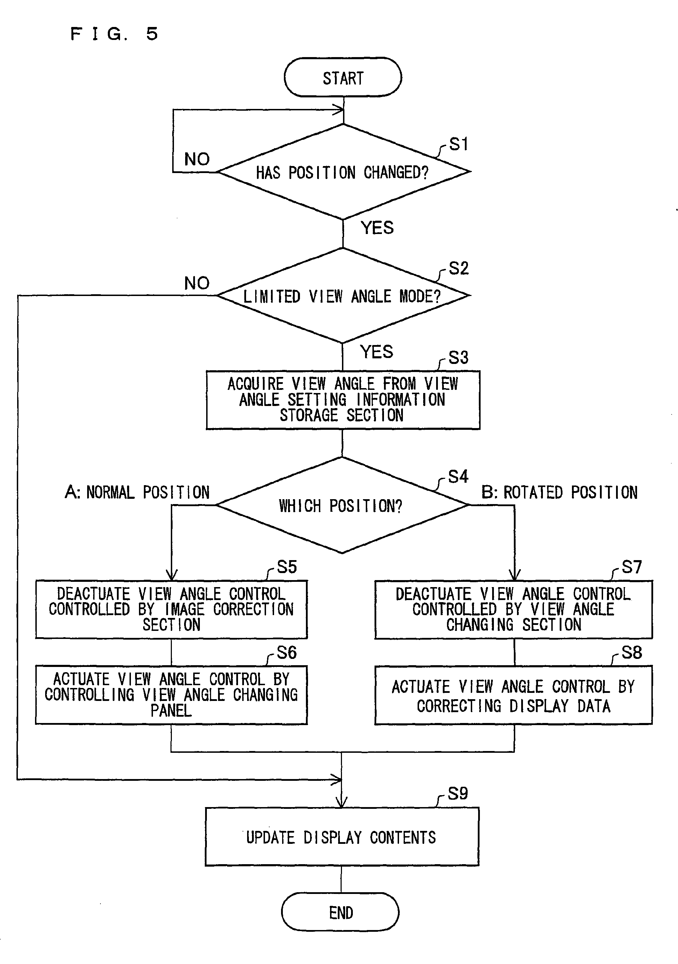

   Fig. 5 is a flow chart illustrating a procedure for a view angle control of a display section in a mobile phone of the present embodiment.
Fig. 6

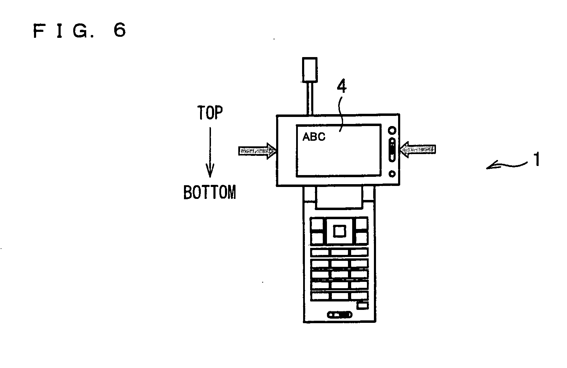

   Fig. 6 is an explanatory view illustrating a view angle control direction when a limit view angle mode is carried out at a rotated position.
Fig. 7
   (a) and (b) of Fig. 7 illustrate a conventional technique; (a) is a front view of a display screen of a mobile phone, and (b) is a top view of the display screen.
Fig. 8
   (a) and (b) of Fig. 8 illustrate a conventional technique, and are explanatory views illustrating a mobile phone which can be used by having the display section in a rotated state.
Fig. 9

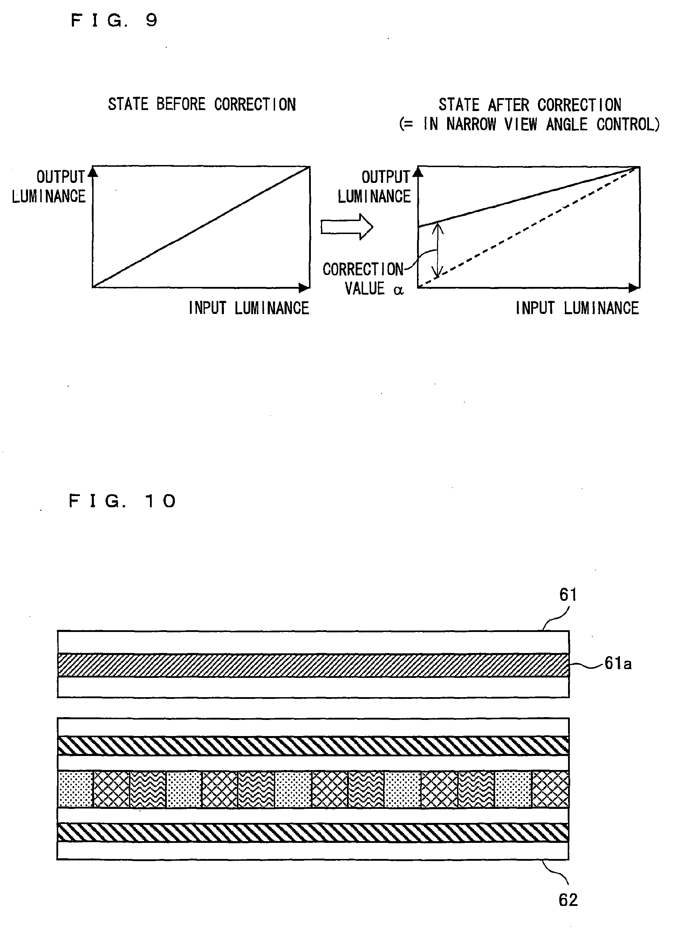

   Fig. 9 is a graph illustrating a relationship between an input luminance and an output luminance of display data at a display section, in a case where a narrow view angle control is carried out by image processing by use of software.
Fig. 10
   Fig. 10 is a cross sectional view illustrating an arrangement of a display section.
Fig. 11

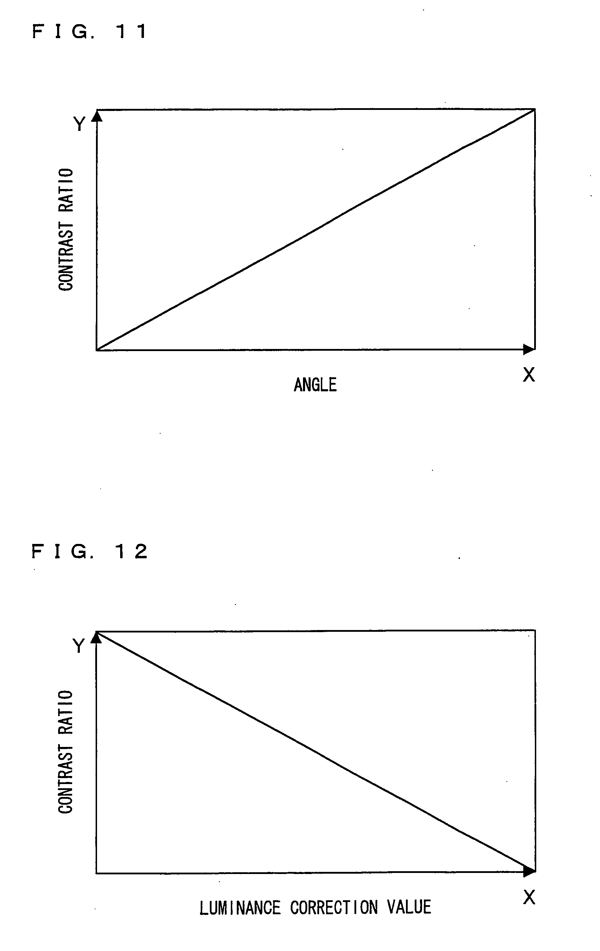

   Fig. 11 is a graph illustrating a correlation between a desired view angle and a contrast ratio for attaining the view angle, which graph is stored in a correction value LUT.
Fig. 12
   Fig. 12 is a graph illustrating a correlation between a desired contrast ratio and a luminance correction value for attaining the contrast ratio, which graph is stored in a correction value LUT.

### Reference Signs List

- 1: mobile phone (liquid crystal display device/portable information terminal device)
- 10: antenna section
- 11: wireless processing section
- 12: audio processing section
- 13: audio input section
- 14: audio output section
- 15: data processing section
- 16: operation section
- 17: storage section
- 18: display section
- 19: photographing section
- 20: power supply section
- 21: control section
- 30: view angle mode setting section
- 31: position determination section (display direction determination means/rotational position determination means)
- 32: view angle changing section (view angle control means)
- 33: image correction section (view angle control means)
- 34: display control section (view angle control means/display direction switching means)
- 40: view angle control section (view angle control means)
- 51: mode flag storage section
- 52: display data storage section
- 53: view angle setting information storage section (view angle information storage section)
- 54: correction value look-up table
- 61: view angle changing panel
- 62: display panel

### Description of Embodiments

One embodiment of the present invention is described below with reference to the attached drawings. In the present embodiment, an explanation is given for a case where a liquid crystal display device of the present invention is applied to a mobile phone in which a rotational position and a display direction of a display section of the liquid crystal display device is flexibly switchable vertically and horizontally.

### External Appearance of Mobile Phone

In Fig. 2, (a) through (c) illustrate external appearances of a mobile phone 1 in accordance with an embodiment of the present invention. The mobile phone 1 of the present embodiment is what is called a clamshell type, and is illustrated in an opened state in Fig. 2. (a) through (c) of Fig. 2 illustrate parts which face inside when the mobile phone 1 is closed, and is a side which a user mainly uses when the mobile phone 1 is opened. In the present specification, a side illustrated in (a) of Fig. 2 is referred to as a front side, and a side which faces outside when the mobile phone 1 is closed (part opposite of the side illustrated in (a) through (c) of Fig. 2 when the mobile phone 1 is open) is referred to as a back side.

As illustrated in Fig. 2, the mobile phone 1 includes a main body 2 and a lid section 3; the main body 2 and the lid section 3 are connected together in a hinge form. The lid section 3 includes a display section 18, and the lid section 3 has a display screen 4 provided on its front side. A screen rotation hinge section 5 is provided on a back side of the lid section 3, so that an orientation of the display section 18 is manually changeable horizontally and vertically. This screen rotation hinge section 5 supports the display section 18 in a rotatable state. This arrangement allows a user to manually rotate to and fix the display section 18 at a predetermined rotational position so as to change the orientation of the display section 18 depending on a usage. Consequently, the display section 18 may be used in a longitudinal state as illustrated in (a) of Fig. 2 and may be used in a horizontally-long state as illustrated in (c) of Fig. 2. Note that, in the present embodiment, a display direction of the display screen 4 is switched in line with the change in the rotational position of the display section 18. As a result, display contents on the display screen 4 are displayed so that the top and bottom of the display contents are always in a proper position, regardless of a provided direction (state of (a) or (c) in Fig. 2) of the display section 18.

In the following description, a usage state in which the display section 18 is fixed longitudinally at a rotational position illustrated in (a) of Fig. 2 so that the display direction runs along long sides of the display screen 4 is referred to as a normal position. On the other hand, a usage state in which the display section 18 is fixed long sideways at a rotational position illustrated in (b) of Fig. 2 so that the display direction runs along short sides of the display screen 4 is referred to as a rotated position.

In the present embodiment, the display direction of the display screen 4 automatically switches in connection with the change in the provided direction of the display device 18. However, the arrangement may be made so that the display direction is changed separately to the change in the provided direction. In this case, the normal position and the rotated position may be distinguished just by the difference in the provided direction of the display section 18, or may be distinguished just by a difference in the display directions of the display screen 4.

The main body 2 has main operation buttons 6 provided on its front side. The main operation buttons 6 include functional buttons for carrying out various settings and function switching of the mobile phone 1, input buttons for inputting symbols such as numbers and letters, and the like. More specifically, functional buttons encompass for example: a power button for switching ON/OFF of power of the mobile phone; a camera button for activating a photographic mode; an e-mail button for activating an e-mail mode; a cross button for moving a cursor vertically and horizontally; and an enter button positioned in the middle of the cross button, for determining various selections. Moreover, numeric keys are an example of the input buttons.

Moreover, the lid section 3 has an antenna section 10, which enables various wireless communications by the mobile phone 1. For example, the antenna section 10 enables a telephone conversation function, a television broadcast receiving function, a data send-receive function and the like. Although not illustrated, the back side of the main body 2 may have a camera provided thereto.

### Arrangement of Mobile Phone - Summary

Fig. 3 is a schematic diagram illustrating an arrangement of the mobile phone 1 in accordance with an embodiment of the present invention. The mobile phone 1 includes an antenna section 10, a wireless processing section 11, an audio processing section 12, an audio input section 13, an audio output section 14, a data processing section 15, an operation section 16, a storage section 17, a display section 18, a photographing section 19, a power supply section 20, and a control section 21.

The antenna section 10 sends radio waves externally, and also receives external radio waves.

The wireless processing section 11 converts data received from the audio processing section 12 or data processing section 15 to a format suitable for wireless transmission, then externally transmits this converted wireless signal via the antenna section 10. Moreover, the wireless processing section 11 converts wireless signals received externally via the antenna section 10 to its original format, and transmits this converted data to the audio processing section 12 or the data processing section 15. More specifically, processes such as a channel codec processing, a base band signal processing, data modulate/demodulate processing, and RF (Radio Frequency) processing are carried out in the wireless processing section 11.

The audio processing section 12 converts an audio signal from the audio input section 13 to predetermined audio data, and transmits this audio data to the wireless processing section 11. Furthermore, the audio processing section 12 converts audio data received from the wireless processing section 11 to an audio signal, and transmits this audio signal to the audio output section 14. More specifically, the audio processing section 12 includes an A/D converter, a D/A converter, an amplifier, and an audio codec circuit.

The audio input section 13 converts an externally inputted radio wave to an audio signal which is an electric signal, and transmits this audio signal to the audio processing section 12. More specifically, the audio input section 13 includes a microphone.

The audio output section 14 converts the audio signal from the audio processing section 12 to a sound wave, so as to output this sound wave externally. More specifically, the audio output section 14 includes a speaker, an earphone, an audio output connecter, and the like.

The data processing section 15 encodes data from the control section 21 to data of a predetermined format so as to transmit this encoded data to the wireless processing section 11. In addition, the data processing section 15 decodes data from the wireless processing section 11 and transmits this decoded data to the control section 21. Examples of data encoding/ decoding (codec) methods carried out by the data processing section 15 are MPEG (Moving Picture Experts Group) - 4 and ITU-T Recommendation H.263.

The operation section 16 generates operation data based on an operation by a user via an input device such as the main operation buttons 6 provided on a surface of the mobile phone 1. The operation section further transmits this operation data to the control section 21. As the input device, a touch panel and other components may be used other than a button switch. Moreover, the operation section 16 generates operation data in which a change in a view angle is instructed based on an operation by the user of a predetermined operating button. This operation data is transmitted to the control section 21 by the operation section 16.

Furthermore, the operation section 16 operates in connection with the screen rotation hinge section 5 which rotatably supports the display section 18. When the provided direction of the display section 18 is changed, the operation section 16 generates information indicative of the provided direction of the display section 18, and transmits this information to the control section 21. This allows the control section 21 to determine the provided direction of the display section 18 so as to determine the display direction. As a result, display data is displayed on the display screen 4 so that the top and bottom of the display data is always in a proper position.

The storage section 17 stores various data and programs. Examples of the storage section 17 are a ROM (Read Only Memory) and a RAM (Random Access Memory)). The ROM is a read-only semiconductor memory for storing (i) a program required for operating the control section 21 and (ii) fixed data such as communications control data or the like. The RAM is provided so as to serve as what is called a working memory, which temporally stores data related to barcode recognition and communications, and data used for calculation and their calculation results. Furthermore, the storage section 17 is fabricated by a rewritable non-volatile memory such as a flash memory and an EEPROM. Photographic data photographed by a camera provided in the mobile phone 1, and setting information for the view angle mode referred by the control section 21 at the time when the view angle control processing is carried out, may also be stored in the storage section 17.

The display section 18 receives display data including images, text, video and the like from the control section 21, and displays contents such as the image, text, video and the like based on the received display data. The display data is information for one screen to be pictured on the display screen 4 of the display section 18. In the present embodiment, more specifically, the display section 18 includes a display panel 62 (Fig. 1) that includes an LCD display element and a driver circuit for driving the display element based on the received display data.

In the present embodiment, the display section 18 has a function (view angle changing panel 61 in Fig. 1) of changing a view angle based on the view angle control data that is provided from the control section 21 to the display section 18.

The photographing section 19 generates data such as an image or a video, by photographing an object. More specifically, the photographing section 19 may include an image sensor such as a CCD (Charge Coupled Device) and a CMOS (Complementary Metal-oxide Semiconductor), for converting light from the object to an electric signal, and a video processing circuit for converting the electric signal from the image sensor to digital data for each of RGB colors. The photographing section 19 transmits the generated data to the control section 21.

The power supply section 20 supplies an appropriate amount of electricity to various arrangements in the mobile phone 1. The power supply section 20 includes, for example, a chargeable secondary battery for example a lithium ion battery, a power circuit, and the like.

The control section 21 integrally controls various arrangements of the mobile phone 1. The control section 21 has functions which are implemented by causing a CPU (Central Processing Unit) to run a program stored in a storage device such as a RAM or a flash memory.

The control section 21 in the mobile phone 1 of the present embodiment has a function to control the view angle of the display screen 4 of the display section 18 and switch from one of a normal view angle mode (broad view angle) and a limited view angle mode (narrow view angle) to the other mode. Switching of the view angle mode is carried out in response to an operation by the user via a predetermined operation button.

In the embodiment of the present invention, the mobile phone 1 carries out respective one of two different view angle control processings depending on the two usage states (normal position, rotated position) of the mobile phone 1 at a limited view angle mode, so as to implement a narrow view angle mode in the display section 18.

A first view angle control processing is a processing for changing the view angle by controlling a constitutional element of the display section 18. In the present embodiment, the display section 18 is arranged so that the view angle control direction in this case is in a direction perpendicular to a display direction (horizontal direction from view of the user) at a normal position, as illustrated in Fig. 7(a).

A second view angle control processing is a processing for changing the view angle by carrying out image processing such as gamma correction to display data indicative of contents to be displayed on the display screen 4, which image processing is carried out by use of software. In the present embodiment, a parameter to be used in the image processing is preset, so that the view angle control direction in this case is in a direction (horizontal direction seen from the user) perpendicular to a display direction at a rotated position ((c) of Fig. 2).

It is possible to carry out the first view angle control processing by employing arrangements disclosed in, for example, Patent Literatures 3, 4, 5, and 6.

Meanwhile, it is possible to carry out the second view angle control process by, for example, correcting a luminance. Fig. 9 is a graph illustrating a relationship between an input luminance and an output luminance at a normal state and in a narrow view angle control.

As illustrated in Fig. 9, in the narrow view angle control, a luminance of a signal to be outputted to the display section 18 is corrected by an image correction section 33, with respect to a luminance of a signal to be inputted to the display control section 34. The contrast ratio is reduced due to this correction, thereby making the screen difficult to see from a person's eyes. How much the luminance is corrected as compared to the normal state is as shown by a correction value α.

This makes letters and the like to be difficult to be seen from an oblique direction that merely reflects light. Hence, it is possible to attain the narrow view angle.

As described above, the mobile phone 1 in accordance with an embodiment of the present invention appropriately carries out a view angle control at a rotated position, at a time when the display section 18 is switched from a normal position to the rotated position. More specifically, the foregoing first view angle control processing is deactuated, and the second view angle control processing is actuated. This allows carrying out an appropriate view angle control according to a usage state (rotational position of the display section 18/display direction of the display screen 4) of the liquid crystal display device.

The following description specifically explains the mobile telephone 1 which switches between and carries out the two view angle control processes.

### Arrangement of Mobile Phone - Details

Fig. 1 is a block diagram illustrating an essential arrangement of a mobile phone 1 in accordance with the present invention. Fig. 1 specifically illustrates an arrangement regarding actions which cause an appropriate view angle control with respect to a usage state of a liquid crystal display device in the mobile phone 1 illustrated in Fig. 3.

As illustrated in Fig. 1, the control section 21 in the mobile phone 1 includes a view angle mode setting section 30, a position determination section 31, a view angle changing section 32, an image correction section 33, and a display control section 34. The view angle changing section 32, the image correction section 33, and the display control section 34 serve as a functional block which functions as a view angle control section 40 that controls a view angle of the display section 18 in the mobile phone 1.

The storage section 17 stores various data for reading and writing data when each of the sections in the control section 21 action in accordance with the view angle control. More specifically, the storage section 17 includes a mode flag storage section 51 and a display data storage section 52. Furthermore, the storage section 17 may also include a view angle setting information storage section 53 and a correction value look-up table (LUT) 54.

The operation section 16 transmits necessary instruction signals in response to an operation by a user for instructing an action to the mobile phone 1. The display section 18 includes a display panel 62 for depicting display data that includes images, videos, and the like on the display screen 4 illustrated in (a) through (c) of Fig. 2, and a view angle changing panel 61 for changing the view angle of the display panel 62.

Fig. 10 is a cross sectional view illustrating an arrangement of the display section 18. As illustrated in Fig. 10, the view angle changing panel 61 is stacked on the display panel 62. When a view angle control is carried out, a voltage is applied to a switch liquid crystal cell 61a of the view angle changing panel 61 so that an orientation state of liquid crystal is changed. This controls a progressing direction of light in a horizontal direction. As a result, it becomes difficult for the user to view the display contents on the screen from both sides of the screen.

Note that the cross sectional view illustrated in Fig. 10 illustrates just one example of an arrangement of the display section 18, and this example does not limit the arrangement of the display section 18.

The view angle mode setting section 30 sets the mode of the view angle control of the display section 18 that is carried out by the view angle control section 40. In the present embodiment, there are two modes: a normal view angle mode (broad view angle) and a limited view angle mode (narrow view angle). When the view angle mode setting section 30 receives, via the operation section 16, an operation (pressing the main operation buttons 6 or the like) for switching from one of the two modes to the other mode, the view angle mode setting section 30 sets a mode flag which is indicative of one of the normal view angle mode or the limited view angle mode to the mode flag storage section 51, in accordance with the instruction signal transmitted via the operation section 16.

The position determination section 31 detects the operation of the user to the display section 18, and determines whether the position of the display section 18 is in the normal position ((a) of Fig. 2) or in the rotated position ((c) of Fig. 2).

As described above, when information indicative of a placement position of the display section 18 is received via the operation section 16 in connection with the screen rotation hinge section 5 for rotating the display section 18, the position determination section 31 determines the position of the display section 18, whether the display section 18 is currently active at the normal position or at the rotated position, based on the information thus received.

The view angle changing section 32 carries out the foregoing first view angle control processing. More specifically, the view angle changing section 32 controls the view angle changing panel 61 of the display section 18 so as to control the view angle of the display panel 62. When (i) the position determination section 31 determines that the position of the display section 18 is at the normal position and (ii) the mode flag in the mode flag storage section 51 is indicative of the limited view angle mode, the view angle changing section 32 controls the view angle changing panel 61 so as to attain the narrow view angle of the limited view angle mode. In this case, as illustrated in (a) of Fig. 7, the view angle control direction of the display section 18 at the normal position is set so as to be perpendicular (horizontal direction) to the display direction.

On the other hand, when the foregoing second view angle control process is to be carried out at the rotated position while the narrow view angle control of the limited view angle mode is carried out, the narrow view angle control is suspended.

The image correction section 33 carries out the foregoing second view angle control processing. More specifically, the image correction section 33 corrects a pixel value of display data (data subjected for display) that is to be outputted to the display panel 62, which display data is subjected to display on the display screen 4, so as to control the view angle on the display screen 4.

In the present embodiment, the pixel correction parameter for attaining the narrow view angle of the limited view angle mode is preset. When (i) the position determination section 31 determines that the position of the display section 18 is in a rotated position, and (ii) the mode flag in the mode flag storage section 51 is indicative of the limited view angle mode, the image correction section 33 corrects display data based on the pixel correction parameter, which display data is acquired from the display data storage section 52. This corrected display data which is corrected for the narrow view angle is outputted to the display panel 62 via the display control section 34.

In the present embodiment, the preset pixel correction parameter is set so that the view angle control direction of the display section 18 is in a horizontal direction at the rotated position. Further, the view angle from the horizontal direction is set so as to be narrow. Thus, peeking in by the surrounding people is prevented.

Fig. 4 illustrates an image observed by a person 81 positioned at a front direction to the display screen 4 and images which are observed by respective persons 82 and 83 each positioned in oblique directions to the display screen 4, in a case where the display section 18 is in the rotated position state in the limited view angle mode.

As illustrated in Fig. 4, in the limited view angle mode carried out by the image correcting section 33 at the rotated position, the image on the display screen 4 is visible from a front bearing, however the image on the display screen 4 is not visible from a right side bearing or a left side bearing; only a black display or a different image is visible from the left or right side bearings.

The display control section 34 converts display data stored in the display data storage section 52 or the corrected display data generated by the image correction section 33 to a format processable by the display panel 62, and outputs this converted data to the display panel 62. Correction is not applied to the display data in a case where the mode flag in the mode flag storage section 51 is indicative of the normal view angle mode, or in a case where although the mode is in the limited view angle mode the position determination section 31 determines the position of the display section 18 as the normal position. Accordingly, the display control section 34 directly acquires the display data from the display data storage section 52, and outputs this data to the display panel 62.

Furthermore, the display control section 34 switches the display direction in accordance with a setting direction of the display section 18, so as to output the display data. In other words, when the display section 18 is positioned longitudinally as illustrated in (a) of Fig. 2, the display data is outputted to the display section 18 so that the display direction is parallel to long sides of the display screen 4. On the other hand, when the display section 18 is positioned so as to be long sideways, the display data is outputted to the display section 18 so that the display direction is parallel to short sides of the display screen 4.

In this case, the position determination section 31 may determine the display direction in accordance with not the rotating operation of the display section 18, but the switching action of the display direction by the display control section 34.

The display data storage section 52 may be fabricated inside the display control section 34 as a frame memory.

Furthermore, a view angle at a time of the limited view angle mode may be stored in the view angle setting information storage section 53, and the view angle control section 40 may carry out view angle control based on the view angle set in the view angle setting information storage section 53. In this case, the view angle mode setting section 30 receives, via the operation section 16, information that is indicative of the view angle to be selected by the user, and stores the information in the view angle setting information storage section 53.

The display section 18 is thus adapted so that the view angle is always the same for both cases where (i) the view angle changing section 32 carries out the view angle control and (ii) the image correction section 33 carries out the view angle control.

For example, if the view angle control is carried out with a same view angle as the normal position although the display section 18 has been switched to the rotated position, the arrangement will be as follows. The correction value LUT 54 has a pixel correction parameter set so that the view angle is the same as the view angle provided by the view angle changing section 32 in the normal position. The correction value LUT 54 may store one pixel correction parameter as the aforementioned, or may store a plurality of pixel correction parameters so as to respectively correspond to view angles which are desirably attained.

The correction value LUT 54 is not limited to a coordinate table, and may store information of a graph that illustrates a correlation.

More specifically, in a case where a narrow view angle is attained by correcting a luminance so as to reduce a contrast ratio, (i) a correlation between a view angle that is desirably attained and a contrast ratio for attaining the view angle, and (ii) a correlation between the contrast ratio and a luminance for attaining the contrast ratio may be stored in the correction value LUT 54 so that the image correction section 33 can refer to these correlations.

Fig. 11 is a graph illustrating a correlation of a view angle desirably attained and a contrast ratio for attaining the view angle stored, which graph is stored in the correction value LUT 54.

The view angle control by adjusting the contrast ratio does not cause the display screen to suddenly be not visible from a certain angle. A direction perpendicular to the display screen is set as 0 degrees, and as the angle becomes larger (the display screen is viewed from an oblique angle), the display screen gradually becomes not visible.

The graph in Fig. 11 has a horizontal axis which indicates an angle of a user's line of sight who views the display screen, where the direction perpendicular to the display screen is a starting point (0 degrees). The most right end X of the horizontal axis shows an angle X at which the displayed contents on the display screen become completely not visible. Examples of this are θn and θw in (b) of Fig. 7. As illustrated also in (b) of Fig. 7, the angle X when the narrow view angle control is carried out is smaller than that of the normal time (θn<θw). On the other hand, a vertical axis is indicative of a respective contrast ratio for attaining the narrow view angle at its respective angle. Hence, the image correction section 33 can specify a required contrast ratio in accordance with a view angle which is desirably attained.

Fig. 12 is a graph stored in the correction value LUT 54, illustrating a correlation between a desirably attained contrast ratio and a luminance correction value (correction value α in Fig. 9) for attaining the contrast ratio.

After the contrast ratio is specified in the foregoing process, the image correction section 33 specifies a luminance correction value for attaining the contrast ratio based on the graph illustrated in Fig. 12.

Hence, the image correction section 33 acquires a luminance correction value required for correction in accordance with the desirably attained view angle, so that an arbitrary view angle is attained.

As described above, according to the arrangement of the mobile phone 1 of the present embodiment, the position determination section 31 detects a switching of a usage state of the display section 18 (the rotational position of the display section 18, the display direction of the display screen 4 for the display contents outputted from the display control section 34), and determines the position which has been switched.

Further, in a case where a limited view angle mode is carried out at the normal position which has not been switched yet, the view angle control section 40 (view angle changing section 32) suspends the narrow view angle control of this mode.

This prevents the view angle control in a view angle control direction at a normal position to be continuously carried out, which view angle control is inappropriate at a rotated position, in a case where the usage state has been switched from the normal position to the rotated position.

Furthermore, when the limited view angle mode is set and the position switches to the rotated position, the view angle control section 40 (image correction section 33) carries out a view angle control in a view angle control direction appropriate for the rotated position.

As from the above, it is possible to carry out appropriate view angle control in accordance with the usage state (the rotational position of the display section 18, and/or, the display direction of the display screen 4) of the display section 18.

In the present embodiment, the mobile phone 1 is arranged so that the position determination section 31 determines a changed usage state of the display section 18 in response an action of the screen rotation hinge section 5, however the view angle control device of the present invention is not limited to this arrangement.

For example, a tilt sensor may be provided to the display device 18 for allowing the position determination section 31 to determine the position, even for a mobile phone 1 which changes the rotational position of the display section 18 by tilting the main body of the mobile phone 1 as illustrated in (a) of Fig. 8. In this case, the position determination section 31 determines the rotational position of the display section 18 in accordance with a signal from the tilt sensor, which signal is inputted to the position determination section 31 in response to a tilt of the display section 18.

Alternatively, it is also assumable of a mobile phone 1 in which a display direction of the display screen 4 is changed in response to an operation via the main operation buttons 6, separately to an operation of a position change of the display section 18. In this case, the position determination section 31 determines the usage state with respect to the operation to switch the display direction, regardless of the position of the display section 18.

### View Angle Control Procedures

Fig. 5 is a flow chart illustrating a procedure of a view angle control of the display section 18 in the mobile phone 1 of the present embodiment.

First, once the display section 18 is operated by a user to change a position of the display section 18, the position determination section 31 detects a change of position (YES in S1). The view angle control section 40 (view angle changing section 32, image correction section 33, and display control section 34) refers to a mode flag in the mode flag storage section 51, and determines whether or not the mobile phone 1 is in the limited view angle mode (S2).

In a case where it is determined that the mode flag indicates a normal view angle mode (NO in S2), the display control section 34 acquires display data to be displayed on the display screen 4 from the display data storage section 52, and outputs this acquired data to the display panel 62. This changes just the display direction so that a top and bottom are properly displayed, and no view angle control is carried out. Display contents on the display screen 4 are updated, and the procedure terminates (S9).

On the other hand, in a case where the view angle control section 40 determines that the mode flag is indicative of a limited view angle mode, the view angle control section 40 acquires information of a view angle that is set (S3), which information is stored in the view angle setting information storage section 53, and carries out a view angle control based on the view angle.

In a case where the position determination section 31 determines that a changed position thus detected is a normal position (A in S4), the view angle control section 40 deactuates the view angle control carried out by the image correction section 33 (S5). More specifically, the display control section 34 outputs, to the display panel 62, not a corrected display data generated by the image correction section 33, but display data which has not been subjected to correction. At this time, the display data is appropriately processed so that the top and bottom are properly displayed, and thereafter outputted to the display panel 62. Subsequently, the view angle changing section 32 controls the view angle changing panel 61 based on the view angle acquired in S3, and carries out the view angle control (S6).

This changes a display direction and updates the display contents at the normal position, so that the display contents is displayed by having a narrow view angle (S9).

When the position determination section 31 determines that the changed position thus detected is a rotated position (B in S4), the view angle control section 40 deactuates the view angle control carried out by the view angle changing section 32 (S7). The view angle changing section 32 suspends the view angle control carried out to the view angle changing panel 61. Subsequently, the image correction section 33 corrects the display data so as to carry out a view angle control (S8). More specifically, the image correction section 33 acquires a pixel correction parameter which corresponds to the view angle acquired in S3. Thereafter, based on the pixel correction parameter, display data which was displayed until the position is changed is acquired from the display data storage section 52 and is corrected. This corrected display data is outputted to the display panel 62 via the display control section 34.

This causes the display direction and the pixel value to be corrected and the display contents to be updated at the rotated position, and the display contents are displayed by having a narrow view angle (S9). Fig. 6 is an explanatory view illustrating a view angle control direction in a case where the limited view angle mode is carried out at the rotated position. As illustrated in Fig. 6, the view angle control direction is a direction perpendicular to the display direction of the display screen 4, and the view angle control direction allows limiting the view from the left and right directional sides from the view of the user. This allows controlling the view angle in an appropriate view angle control direction even if the position of the display section 18 is changed to the rotated position. Hence, it is possible to prevent the displayed contents on the display screen 4 from being peeked in by the surrounding people.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Finally, the blocks of the mobile phone 1, particularly the position determination section 31 and the view angle control section 40, may be realized by way of hardware or software as executed by a CPU as follows:

The mobile phone 1 includes a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the mobile phone 1 a computer-readable storage medium containing control program code (executable program, intermediate code program, or source program) for the mobile phone 1, which is software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The mobile phone 1 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network. The present invention encompasses a carrier wave or data signal transmission in which the program code is embodied electronically.

### Supplementary Matters

Furthermore, in the foregoing liquid crystal display device which switches the display direction, it is preferably arranged such that the predetermined view angle control direction corresponding to the display direction is a horizontal direction of the display section where the display direction of the display section is a vertical direction, and an angle difference between (i) a display direction which has been switched by the display direction switching means and which has been determined by the display direction determination means and (ii) a display direction which has not been switched yet by the display direction switching means is same as an angle difference between (i) a first view angle control direction in which the view angle control means controls a view angle, the first view angle control direction corresponding to a display direction which has not been switched yet by the display direction switching means and (ii) a second view angle control direction in which the view angle control means controls a view angle, the second view angle control direction corresponding to a display direction which has been switched by the display direction switching means.

According to the arrangement, a horizontal direction (direction perpendicular to a display direction) of the display section is a view angle control direction, where the display direction of the display section is in a vertical direction. In this case, when the display section is provided so that a top and bottom of the display contents displayed on the display section is properly displayed, view angle control means changes a width of the view angle in a horizontal direction from view of the user. That is to say, the view from left and right sides viewed from the user is limited so as to prevent the display contents from being peeked in by surrounding people (narrow view angle), or alternatively, the view is broadened so that the displayed contents is visible even from the left and right sides, which allow the display screen to be shared among many people.

Further, the view angle control means controls the view angle, in response to the switching of the display direction, by changing the view angle control direction. The view angle direction is changed in the same angle difference as an angle difference between (i) a display direction which has not been switched yet and (ii) a display direction which has been switched. That is to say, the view angle control means controls the view angle in a direction perpendicular to a display direction which has been switched. Hence, as long as the display section is provided in the display direction, the view angle can always be controlled in a horizontal direction from view of the user.

The following description is an explanation using a specific example. The following description explains a case where a display direction is switched by 90 degrees, for example.

When a display direction switches to a different display direction by 90 degrees (for example, a longitudinal display section is rotated by 90 degrees so as to be positioned long sideways, and together with this, the display direction is rotated by 90 degrees so that a top and bottom of the display contents are properly displayed, or the like), the view angle control direction of the view angle control which has not been switched yet also requires to be switched together, or else the view angle can only be changed parallel in a display direction which has been switched (vertical direction from view of the user). This causes inconvenience for the user.

In a case where the display direction which has been switched and which has been determined by the display direction determination means is different from the display direction which has not been switched yet by 90 degrees, the view angle control means controls the view angle in a view angle control direction perpendicular to the display direction which has been switched (horizontal direction seen from the user), which view angle control direction is different by 90 degrees from the view angle control direction perpendicular to the display direction which has not been switched yet.

This allows appropriately carrying out control of the foregoing narrow view angle and broad view angle, always in the horizontal direction from view of the user, even if the display direction is switched by 90 degrees.

As described above, even if the display direction is switched by 90 degrees, it is always possible to carry out appropriate view angle control (for example, view angle control which changes the view angle in a horizontal direction from view of the user) similarly to the view angle control direction which has not been switched yet, by switching the view angle control direction in accordance with the switching of the display direction. Hence, it is possible to appropriately prevent the display contents from being peeked in by the surrounding people, regardless of which direction the display direction is switched to. As a result, even if the display direction of the display section is switched, it is possible to maintain an appropriate view angle.

It is preferable for the aforementioned liquid crystal display device in which the display section is rotatable on an axis perpendicular to a display screen of the display section so as to be fixed at respective one of at least two rotational positions, to be arranged such that a first view angle control direction, corresponding to a first rotational position at which the display section stays before the display section rotates, is a horizontal direction of the display section which stays at the first rotational position, and a second view angle control direction, corresponding to a second rotational position at which the display section stays after the display section rotated, is a horizontal direction of the display sections which stays at the second rotational position.

According to the arrangement, the view angle control direction of the rotational position is always in a horizontal direction of the display section fixed at the rotational position. The view angle control means carries out a view angle control of the display section by changing a width of the view angle in a horizontal direction of a fixed display section.

Hence, no matter which rotational position the display section is rotated to, it is possible to appropriately control the narrow view angle and the broad view angle always in a horizontal direction from view of the user.

As described above, no matter which rotational position the display section is rotated to, the view angle control direction is changed in accordance with this rotation of the display section. Hence, it is possible to always carry out appropriate view angle control (horizontal direction of the display section, i.e., view angle control which changes the view angle in a horizontal direction from view of the user) similarly with the view angle control direction which has not been switched yet. This appropriately prevents the display contents from being peeked from the surroundings, no matter which rotational position the display section is rotated to. As a result, even if the display direction of the display section is switched, it is possible to maintain an appropriate view angle.

Furthermore, the view angle control means may cause a view angle of the display section in the second view angle control direction to be a same view angle as a view angle, in the first view angle control direction, which is indicated by angle information stored in a view angle information storage section.

According to the arrangement, the view angle control means controls such that a view angle in the second view angle control direction of a display section during action in a second display direction which has been switched (or, a display section fixed at a second rotational position which has been rotated) has the same view angle as that of the first view angle control direction of the display section during action in the first display direction which has not been switched yet (or, a display section fixed at a first rotational position which has not been rotated yet). Information of the view angle in the first view angle control direction is stored in the view angle information storage section.

This maintains, at all times, a same view angle of the display section even in cases where, for example, the display section has been switched, or the view angle is controlled in a different view angle control direction due to a rotation of the display section or the like. As a result, it is possible to maintain an appropriate view angle even if the position of the display section has been switched.

Furthermore, it is preferable for the view angle control means to correct a pixel value of display data to be displayed on the display section, so as to carry out at least one of a view angle control to be carried out in the first view angle control direction and a view angle control to be carried out in the second view angle control direction, by correcting a pixel value of display data to be displayed on the display section.

In order to carry out the view angle controls in the first view angle control direction and in the second view angle control direction by changing an arrangement (liquid crystal layer, polarizing plate, substrate, backlight, and the like) of the display section, it is necessary to provide separate arrangements for carrying out the view angle control in the first view angle control direction and for carrying out the view angle control in the second view angle control direction. This makes the arrangement of the display section complex, and causes the size of the display section to increase.

However, by carrying out at least one of the view angle control by correcting a pixel value of display data (for example, software processing of gamma correction and the like) as the aforementioned, it is possible to maintain an appropriate view angle with respect to a position (display direction/rotational position) while not making the arrangement of the liquid crystal display device complex or large in size. Therefore, in a case where the liquid crystal display device is provided to a portable information terminal device essentially reduced in size and weight, it is particularly great in effect since complexity and increase in size of the liquid crystal display device is avoided.

The view angle control means may suspend a view angle control in the first view angle control direction while the view angle control is being carried out in the second view angle control direction.

According to the arrangement, the view angle control means suspends the view angle control that has been carried out in accordance with the view angle control direction of the display direction (this may also be the rotational position; hereinafter described just by the display direction) which has not been switched yet, in a case where the display direction has been switched to a different display direction.

The view angle control which has been carried out before the display direction has been switched is not necessarily suitable for controlling a view angle of the display section while the display section is in action in a display direction which has been switched. Therefore, it is possible to prevent carrying out of inappropriate view angle control followed by the switching, by suspending, in response to the switching of the display direction, the view angle control carried out based on the view angle control direction which has not been switched yet. As a result, even if the display direction of the display section is switched (regardless of which rotational position the display section is rotated to), an appropriate view angle is maintained.

The following description uses a specific example for explanation. For example, assume that a longitudinal display section is rotated by 90 degrees and fixed so as to be long sideways, and further the display direction is switched by 90 degrees to a different display direction, in line with the rotation of the display section, in a liquid crystal display device which controls a view angle by changing a width of the view angle in the left and right sides from view of the user as the aforementioned. In this case, if the view angle control based on the view angle control direction which has not been switched (rotated) yet is carried out is not suspended, this would cause the view angle to change in a parallel direction in the display direction which has been switched (vertical direction from view of the user). This causes inconvenience to the user.

However, according to the arrangement, the view angle control in a vertical direction from view of the user (view angle control direction) carried out from before the switching is carried out can be suspended in response to the switching of the display direction by 90 degrees. Hence, the foregoing inconvenience is solved.

It is further preferable for the view angle control means to further suspend a narrow view angle control in a case where the narrow view angle control is carried out in the first view angle control direction.

According to the arrangement, the view angle control means suspends the narrow view angle control in a case where (i) narrow view angle control is carried out which narrows a view angle in a view angle control direction corresponding to the display direction which has not been switched yet (rotational position which has not been rotated yet), and (ii) the display direction has been switched (the display section has been rotated).

Hence, it is possible to prevent inappropriate narrow view angle control to be carried out, after the display direction (rotational position) has been switched. As described above, it is possible to control the view angle appropriately in accordance with the display direction (rotational position).

The following description uses the foregoing example for explanation. For example, assume that with a liquid crystal display device that carries out the narrow view angle control by limiting the view angle from left and right sides from view of the user, a display direction is switched by 90 degrees (in line with this, a user rotates the display section by 90 degrees). In this case, if the view angle control carried out based on the view angle control direction which has not been switched yet is not suspended, this causes the view angle in a parallel direction of the display direction which has been switched (vertical direction from the user) to be limited. This causes inconvenience to the user. That is to say, if the narrow view angle control which limits the view angle is not deactuated, the view in the vertical direction is limited when the display section is tilted forwards and backwards. This causes the user themselves to not be able to visualize the display contents on the display screen.

However, according to the arrangement, it is possible to suspend, in accordance with the switching of the display direction by 90 degrees, the view angle control based on the vertical direction (view angle control direction) from view of the user before the switching is carried out. This solves the aforementioned inconvenience. As a result, it is possible to maintain an appropriate view angle, even if the display direction (rotational position) of the display section has been switched.

### Industrial Applicability

A liquid crystal display device of the present invention can maintain an appropriate view angle in accordance with a usage state of the liquid crystal display device. Therefore, the liquid crystal display device is applicable to an information processing device which includes a liquid crystal display device operable in various rotational positions or various display directions. Furthermore, the liquid crystal display device of the present invention can limit the view angle in an appropriate view angle control direction in accordance with the usage state. Hence, the liquid crystal display device is particularly suitably used in portable information terminal devices such as a mobile phone, which are small in size, which can easily rotate the liquid crystal display device, and are frequently used in an environment which may be peeked in by surrounding people.

## Claims

1. A liquid crystal display device comprising:
display direction switching means for switching a display direction to one of at least two display directions, the display direction being indicative of a top and bottom of display contents displayed on a display section;
display direction determination means for determining a display direction which has been switched by the display direction switching means; and
view angle control means for changing a view angle of the display section in a predetermined view angle control direction corresponding to the display direction determined by the display direction determination means.

2. A liquid crystal display device in which a display section is rotatable on an axis perpendicular to a display screen of the display section so as to be fixed at respective one of at least two rotational positions,
said liquid crystal display device comprising:
rotational position determination means for determining a rotational position of the display section; and
view angle control means for changing a view angle of the display section in a predetermined view angle control direction corresponding to the rotational position determined by the rotational position determination means.

3. The liquid crystal display device as set forth in claim 1, wherein
the predetermined view angle control direction corresponding to the display direction is a horizontal direction of the display section where the display direction of the display section is a vertical direction, and
an angle difference between (i) a display direction which has been switched by the display direction switching means and which has been determined by the display direction determination means and (ii) a display direction which has not been switched yet by the display direction switching means is same as an angle difference between (i) a first view angle control direction in which the view angle control means controls a view angle, the first view angle control direction corresponding to a display direction which has not been switched yet by the display direction switching means and (ii) a second view angle control direction in which the view angle control means controls a view angle, the second view angle control direction corresponding to a display direction which has been switched by the display direction switching means.

4. The liquid crystal display device as set forth in claim 2, wherein
a first view angle control direction, corresponding to a first rotational position at which the display section stays before the display section rotates, is a horizontal direction of the display section which stays at the first rotational position, and
a second view angle control direction, corresponding to a second rotational position at which the display section stays after the display section rotated, is a horizontal direction of the display sections which stays at the second rotational position.

5. The liquid crystal display device as set forth in claim 3 or 4, wherein
the view angle control means causes a view angle of the display section in the second view angle control direction to be a same view angle as a view angle, in the first view angle control direction, which is indicated by angle information stored in a view angle information storage section.

6. The liquid crystal display device as set forth in any one of claims 3 through 5, wherein
the view angle control means corrects a pixel value of display data to be displayed on the display section, so as to carry out at least one of a view angle control to be carried out in the first view angle control direction and a view angle control to be carried out in the second view angle control direction.

7. The liquid crystal display device as set forth in any one of claims 3 through 6, wherein
the view angle control means suspends a view angle control in the first view angle control direction while the view angle control is being carried out in the second view angle control direction.

8. The liquid crystal display device as set forth in claim 7, wherein
the view angle control means further suspends a narrow view angle control in a case where the narrow view angle control is carried out in the first view angle control direction.

9. A portable information terminal device comprising a liquid crystal display device recited in any one of claims 1 through 8.

10. A method for controlling a view angle of a liquid crystal display device, comprising the steps of:
(i) switching a display direction to one of at least two display directions, the display direction being indicative of a top and bottom of display contents displayed on a display section of the liquid crystal display device;
(ii) determining a display direction which has been switched in the step (i); and
(iii) changing a view angle of the display section in a predetermined view angle control direction corresponding to the display direction determined in the step (ii).

11. A method for controlling a view angle of a liquid crystal display device in which a display section is rotatable on an axis perpendicular to a display screen of the display section so as to be fixed at respective one of at least two rotational positions,
said method comprising the steps of:
(i) determining a rotational position of the display section; and
(ii) changing a view angle of the display section in a predetermined view angle control direction corresponding to the rotational position determined in the step (i).

12. A control program for causing a computer to function as each of the means of a liquid crystal display device recited in any one of claims 1 through 8 or to function as each of the means of a portable information terminal device recited in claim 9.

13. A computer-readable recording medium in which a control program recited in claim 12 is stored.
